# FASCICULE DE BREVET EUROPEEN

(11) **EP 1 294 809 B1**
(45) Date de publication et mention de la délivrance du brevet: **08.11.2006**
(21) Numéro de dépôt: 01945404.0
(22) Date de dépôt: 12.06.2001
(51) Int. Cl.: C08L 95/00, E01C 7/18, E01C 19/10, C08K 3/32

(54) **PROCEDE D'ENROBAGE DE SUPPORTS PAR UN LIANT EN EMULSION**
VERFAHREN ZUR BESCHICHTUNG EINES TRÄGERMATERIALS DURCH EINE BINDEMITTELEMULSION
METHOD FOR COATING SUPPORTS WITH AN EMULSION BINDER

(30) Priorité: 14.06.2000 FR 0007579
(43) Date de publication de la demande: 26.03.2003
(73) Titulaire: Muntzer, Jean, F-67300 Schiltigheim (FR); Muntzer, Isabelle, 69005 Lyon (FR); Muntzer, Emile Jacques, 67000 Strasbourg (FR); Muntzer, Paul Emile, 67000 Strasbourg (FR)
(72) Inventeur: MUNTZER, Emile, Jacques, F-67000 Strasbourg (FR); MUNTZER, Paul, Emile, F-67000 Strasbourg (FR)
(74) Mandataire: Nuss, Pierre
(86) Numéro de dépôt international: PCT/FR2001/001818
(87) Numéro de publication internationale: WO 2001/096479

(56) Documents cités:
- EP-A- 0 555 167
- WO-A-96/21686
- FR-A- 867 054

## Description

La présente invention concerne le domaine de l'enrobage, notamment bitumineux, de supports minéraux, de granulométrie variée, et a pour objet un procédé d'enrobage à froid de supports par des liants en émulsion, ainsi que l'utilisation de produits obtenus par celui-ci.

Par le document EP-A-0 555 167, il est connu de traiter des supports granulaires de manière à les rendre hydrophobes.

L'hydrophobation est applicable à tous les corps, jusqu'à leurs poudres les plus fines, pourvu qu'ils soient insolubles ou très peu solubles dans l'eau. Il est évoqué dans le document précité que les émulsions peuvent servir de liant d'enrobage, et il y est fait mention d'émulsions dont les globules de bitume portent une charge électrique négative et qui se rompent au contact des supports hydrophobés.

La technique de l'enrobage par un liant sous forme d'émulsion consiste à libérer le bitume de sa forme émulsion, c'est-à-dire de faire rompre l'émulsion de manière à mettre à nu ce liant hydrocarboné pour que, sous la forme d'un hydrocarbure libre, il puisse être attiré et retenu par les supports hydrophobés.

Cette technique d'enrobage est notamment décrite dans le document EP-A-0 805 900.

La présente invention a pour but de s'affranchir de la gestion délicate de la rupture contrôlée d'une émulsion, pour créer de nouvelles conditions d'ouvrabilité et de sécurité, notamment dans le cadre de la préparation et de l'application d'un enrobé bitumineux, en utilisant les mêmes bitumes que ceux employés en enrobage à chaud, sans toutefois nécessiter un quelconque chauffage.

A cet effet, la présente invention a pour objet un procédé d'enrobage de supports, du type granulats ou analogues, caractérisé en ce qu'il consiste à réaliser une hydrophobation des supports à enrober, de nature quelconque, à fournir une émulsion de bitume ou une émulsion hydrocarbonée anionique H / E, de formation spontanée ou non, suffisamment stabilisée pour éviter toute rupture même au contact des supports à enrober hydrophobés et s'inversant automatiquement à froid en émulsion E / H au contact de ces derniers, puis à mettre en contact lesdits supports hydrophobés avec une quantité adéquate d'émulsion bitumineuse ou hydrocarbonée et à mélanger ces ingrédients, par exemple par malaxage, pendant une durée déterminée avant leur application, pour obtenir une inversion spontanée de l'émulsion H/E en émulsion E/H et un enrobage adhésif et ouvrable desdits supports hydrophobés par ledit liant bitumineux ou hydrocarboné formant la phase continue et extérieure de l'émulsion inversée E/H, ce sans rupture de ladite émulsion, et enfin à expulser l'eau de l'émulsion inverse E/H, par exemple par composition ou en inversant ladite émulsion E/H.

La présente invention ne recherche plus les meilleures conditions de rupture de l'émulsion d'enrobage, mais en fait les meilleures conditions de réalisation de l'inversion d'une émulsion H / E (huile dans eau) en émulsion E / H (eau dans huile) en rendant la rupture de l'émulsion H / E quasi impossible. On recherchera par contre les meilleures conditions pour que les stabilisants employés favorisent en même temps cette inversion, de manière à obtenir un liant d'enrobage par inversion de son émulsion.

Les émulsions de bitume, baignant par définition dans de l'eau, s'offrent donc tout naturellement comme forme de liant d'enrobage, puisqu'elles ont la mobilité de pouvoir transporter à froid les bitumes visqueux en usage dans la technique de l'enrobage à chaud aux endroits où ils doivent se déposer adhésivement, en milieu aqueux.

L'eau devient donc un facteur complémentaire utile et cesse d'être l'antagoniste des enrobages bitumineux, comme cela est le cas pour les procédés à chaud.

Les supports hydrophobés pourront, par exemple, être obtenus par le procédé décrit dans le document EP-A-0 555 167 précité.

Avantageusement, la surstabilisation de l'émulsion de bitume ou hydrocarbonée anionique est réalisée en milieu alcalin au moyen d'une ou de plusieurs substances chimiques alcalines, utilisées seules ou en association avec d'autres substances alcalinisantes. On ajoute ultérieurement aussi des produits capables de faire sortir l'eau émulsionnée dans le bitume de l'émulsion E /H (décrit plus en détail ci-après).

Conformément à un mode de réalisation préférentiel de l'invention, la surstabilisation est obtenue et ajustée par l'ajout d'une quantité prédéterminée de phosphate trisodique Na₃PO₄.12H₂O, ce dernier favorisant simultanément l'inversion de l'émulsion H / E en émulsion E / H.

Selon l'invention, le degré ou le potentiel d'hydrophobation des supports à enrober est ajusté et conservé à un niveau suffisant pour que l'eau émulsionnée dans le bitume, ou le liant hydrocarbonée analogue, après inversion de l'émulsion H / E originelle au contact des supports hydrophobés, soit constamment soumis à une pression d'expulsion, dès le début du mélangeage.

L'émulsion H / E admet sans difficulté pour toutes les compositions minérales et granulaires possibles la quantité nécessaire de phosphate trisodique pour inhiber toute rupture de cette émulsion pendant l'enrobage. A cause de ces hautes doses alcalinisantes et de l'état d'hydrophobicité des supports d'enrobage l'inversion de cette émulsion anionique H / E est stimulée. Par son seul contact avec les supports hydrophobés et sa haute stabilité elle s'inverse spontanément. Il n'est besoin d'aucun autre moyen d'inversion.

De même, notamment dans le cas d'un liant bitumineux constituant une application préférentielle de la présente invention, le degré ou le potentiel d'hydrophobation des supports à enrober est porté à un niveau suffisant pour que la force d'attraction résultante génère une action d'attirance constante des globules de bitume sur lesdits supports, dont l'intensité permet, compte tenu de la plasticité des liants bitumineux à toute température, notamment aux températures extérieures usuelles, que leur aplatissement sur ces supports, pendant et après l'élimination, naturelle ou provoquée, de l'eau de l'émulsion, devienne physico-chimiquement adhésif et imperméable à l'eau.

Immédiatement après mise en contact de l'émulsion précitée avec les supports hydrophobés, commence le combat de l'eau faisant partie de l'émulsion et qui cherche à se maintenir en émulsion dans le bitume - maintenant phase extérieure et continue de cette émulsion E / H - et celui des supports hydrophobés qui cherchent à éloigner cette eau de leurs surfaces qui ne peuvent plus être mouillées par celle-ci. Par le travail conjugué de ces forces agissant dans le même sens et dont les effets s'ajoutent, l'émulsion inverse E / H s'accroche d'autant mieux aux supports hydrophobés en restant une émulsion inverse E / H qu'il faut briser.

Tant que de l'eau reste émulsionnée dans le bitume, elle maintient une ouvrabilité variable en fonction de son taux d'eau inclus. Cette ouvrabilité diminue au fur et à mesure que ce taux d'eau dans l'émulsion diminue.

Il se peut même que l'eau de l'émulsion d'origine H / E, avant son inversion, n'ait pas été suffisante pour garantir l'ouvrabilité de l'enrobé, le temps nécessaire à sa pose et à sa compaction (un rajout d'eau peut s'avérer nécessaire).

Ainsi, conformément à une caractéristique de l'invention, le degré d'ouvrabilité et/ou la durée de conservation d'un certain degré d'ouvrabilité de l'enrobé est (sont) réglé(e)(s) par le taux d'eau dans l'émulsion originelle et, le cas échéant, par l'emploi d'émulsions à plus ou moins faible taux de bitume.

Comme un excès d'alcali, notamment sous forme de phosphate trisodique, n'est pas nuisible au procédé et que l'hydrophobation reste une constante, il est possible de concevoir pour chaque catégorie de bitume, une émulsion anionique surstabilisée correspondante unique, d'emploi universel, qui peut servir à enrober tous les supports hydrophobés en enrobages ouverts ou fermés, se présentant et restant ouvrables comme l'enrobé à chaud.

Cette émulsion peut donc servir partout où des supports hydrophobés sont disponibles et où le bitume de la catégorie émulsionnée est demandé. Il est rappelé que du fait de l'hydrophobation des supports d'enrobage, l'émulsion n'a plus à tenir compte de leur origine acide ou basique.

Un sable hydrophobé, traité en mortier par une bétonnière, par exemple, pourrait être gâché avec cette émulsion à la place de l'eau sans utiliser de liants hydrauliques, émulsion utilisée sans autre adjuvant, pour monter des maçonneries aux joints noirs et isolants. La sortie de l'eau de ce mortier peut ici être favorisée par une troisième force, pour l'éliminer encore plus rapidement, à savoir la porosité des briques jointoyées.

Dans chaque entreprise disposant de cette émulsion et de supports hydrophobés, toutes les combinaisons d'utilisation sont possibles et un travail de détail se réduit à un simple mélange à froid des deux vecteurs d'enrobage.

Puisque le stockage des enrobés obtenus en silos parait risqué du fait d'une possible prise en bloc, on stocke seulement les supports hydrophobés, à l'air libre, pour lesquels les silos ne sont pas nécessaires. Les prélèvements destinés à l'enrobage sont accompagnés de leurs doses nécessaires d'émulsion. L'enrobage aura lieu au pied des chantiers, avantageusement dans des malaxeurs mobiles qui alimentent les finisseurs.

Ainsi pour la première fois, à la connaissance des inventeurs, on dispose d'une émulsion qui est capable, comme le bitume chaud, de produire un enrobé à froid performant avec un simple malaxeur et une émulsion surstabilisée.

On peut tirer une première conclusion de ce qui précède en matières d'organisation et de logistique, telle qu'explicitée ci-dessous.

Les centres privilégiés pour fabriquer, stocker, distribuer et formuler les supports hydrophobés et, dans la mesure du possible, les liants d'enrobage, sont les sablières, les carrières et les ballastières. Ces lieux existent en général et sont liés depuis longtemps aux besoins en sables et en concassés nécessités par les entreprises d'une région donnée. Beaucoup possèdent ou abritent des postes d'enrobage qui, sous cette forme, ne sont plus nécessaires.

Une organisation idéale pour un pays serait donc une structuration pour que chaque endroit important de production de supports d'enrobage hydrophobés devienne également un centre de production de l'émulsion d'enrobage, coiffé en groupements par la raffinerie la mieux située.

Si l'on prend en compte que les entreprises du bâtiment peuvent devenir des clients importants pour les mortiers isolants et les autres applications de l'invention, l'investissement dans une installation de réception du bitume qui se transforme en émulsion de formation spontanée dans le temps normalement nécessaire à son déchargement serait rapidement amortie et les producteurs de sables et de concassés verraient leur chiffre d'affaires augmenter pour un faible investissement dans des bassins d'émulsion.

En général les entreprises de toutes les tailles auront la possibilité d'exécuter leurs travaux d'enrobage et de maçonnerie, sans dépendre de situations de monopoles et sans avoir à investir dans des postes d'enrobage, car en général leur équipement et leur parc d'engins seront suffisants.

La présente invention est donc basé sur un nouveau principe d'enrobage qui permet d'utiliser, à froid, adhésivement et ouvrablement, des liants plastiques et élastiques de hautes viscosités et, par l'intermédiaire de leurs émulsions anioniques H /E d'empêcher toute rupture, dans n'importe quelle situation d'enrobage. Par contre par leurs contacts avec des supports hydrophobés, elles s'inversent automatiquement en émulsions E / H.

Par ce nouveau principe, dont un exemple dé mise en oeuvre est décrit ci-après, on arrive à concentrer, à froid, sur des supports hydrophobés, le bitume ayant été immédiatement à son arrivée de la raffinerie, mis en émulsion et en stockage refroidissant. Sous cette forme l'émulsion est en attente et en état de mise en condition sous forme de liant d'enrobage, pour donner l'optimum d'ouvrabilité à l'enrobé à obtenir, en fonction de ses conditions de mise en oeuvre.

Cette émulsion s'inverse à froid en émulsion E / H, dès qu'elle vient en contact avec les supports hydrophobés.

Ainsi par l'action constante des forces qui agissent à l'intérieur d'un tel enrobé à l'émulsion inverse, l'eau est progressivement exprimée et éliminée de l'intérieur du bitume qui constitue la phase continue et extérieure de l'émulsion E / H. Son contact avec les supports d'enrobage devient donc direct et déclenche le phénomène d'attirance mutuelle qui a été créée par l'hydrophobation. Les hydrophobés s'encollent fortement et adhésivement au bitume toujours en émulsion E / H.

La déshydratation de l'émulsion est aisément réalisable par les additifs employés dans la technique des pétroles bruts.

En effet, l'expulsion de l'eau d'une émulsion inverse E / H peut être obtenue par des procédés connus, notamment employés pour casser les émulsions E / H des pétroles bruts.

Les procédés chimiques et physiques précités ont notamment été publiés dans "EMULSIONEN", EHRICH MANEGOLD, page 260 et suivantes, édition 1952, Strassenbau. Chemie und Technik Verlagsgesellschaft m.b.H, Heidelberg et dans "Technique des Emulsions", Otto Lange, "Le traitement des huiles et graisses minérales", pages 173 à 179, DUNOD, 1934.

Parmi les produits proposés, les inventeurs recommandent l'emploi de carbonate de soude Na₂CO₃ à introduire dans l'émulsion surstabilisée, par exemple par du phosphate trisodique, dans une proportion inférieure ou égale à 0,1 % du poids de l'émulsion. L'enrobé obtenu avec cette émulsion est, après sa mise en place, soumis à une énergique compaction par un cylindrage vibrant.

De faibles, voire très faibles, doses d'amidon, inférieures ou égales à 0,1 % du poids de l'émulsion et avantageusement dilué dans une solution d'un savon anionique, ajoutées à l'émulsion avec le carbonate de soude, accélèrent la sortie ou l'expulsion de l'eau de ladite émulsion.

En vue de faire sortir l'eau d'une autre manière tout en allongeant le temps de l'ouvrabilité, il suffit en général de réinverser l'émulsion E/H en émulsion H/E, en ajoutant des savons anioniques du type oléate de soude, de manière à remettre l'eau en phase extérieure continue. Il s'en suit que 1e bitume reste encollé aux supports hydrophobés et que l'eau de la rupture progressive est expulsée à l'air libre.

Le compactage et la circulation font que, rapidement, la rigidité du tapis d'enrobés obtenus par le procédé selon l'invention atteint celle qu'atteint un enrobé à chaud classique, qui a toujours le handicap d'une adhésivité diminuée du fait qu'elle est purement mécanique.

La présence d'eau dans le déroulement de sa séparation lente et progressive du bitume, est importante pour le contrôle de l' ouvrabilité des enrobés selon l'invention. Donc au lieu que l'eau soit un adversaire à combattre, elle devient, grâce à l'invention, un allié indispensable.

L'homme du métier pourra se demander jusqu'à quelle dureté ou viscosité du bitume on peut descendre pour que se forme encore un film de couverture cohérent et continu susceptible de couvrir les supports hydrophobés. Les inventeurs estiment que cette limite se confond avec celle permettant encore une fabrication correcte d'émulsions avec des bitumes durs, comme ceux d'indice de pénétration de l'ordre de 20/30 par exemple.

La recherche de plastiques durcissant de plus en plus employés en mélange avec les bitumes, semble perdre de son importance devant l'emploi de bitumes purs et durs qui n'ont pas besoin de leur haute viscosité pour prétendre accéder à une adhérence suffisante. Or, dans le procédé selon l'invention, l'adhérence mécanique est remplacée par une adhésivité physico-chimique vraie.

La présente invention induit l'ouverture de nouveaux champs de recherches, avec une baisse du gigantisme et des complications des postes d'enrobage, sans introduire des inconvénients pour l'environnement qui, au contraire, disparaissent.

En outre, les inventeurs estiment éventuellement possible l'application de l'invention au transfert à froid d'une laque ou d'une peinture dure émulsionnée sur des supports hydrophobés, par inversion d'émulsion.

La présente invention concerne également l'utilisation des enrobés bitumineux obtenu au moyen d'un procédé décrit ci-dessus, avec des ouvrabilités adaptées, pour des travaux de revêtement routier, d'étanchéité et de maçonnerie dans le bâtiment ou pour la réalisation de produits agglomérés.

Ainsi, l'invention permet, avec les mêmes bitumes visqueux que ceux employés dans l'enrobage à chaud, l'enrobage à froid de toutes les formulations granulaires hydrophobées, sans passer par un poste d'enrobage traditionnel.

En effet, il suffit d'un malaxeur conventionnel, de granulats hydrophobés et de l'émulsion selon l'invention.

Bien entendu, l'invention n'est pas limitée au mode de réalisation décrit. Des modifications restent possibles, notamment du point de vue de la constitution des divers éléments ou par substitution d'équivalents techniques, sans sortir pour autant du domaine de protection de l'invention.

## Revendications

1. Procédé d'enrobage de supports, du type granulats ou analogues, **caractérisé en ce qu'**il consiste à réaliser une hydrophobation des supports à enrober, de nature quelconque, à fournir une émulsion de bitume ou une émulsion hydrocarbonée anionique H / E, de formation spontanée ou non, suffisamment stabilisée pour éviter toute rupture au contact des supports à enrober hydrophobés et s'inversant automatiquement à froid en émulsion E / H au contact de ces derniers, puis à mettre en contact lesdits supports hydrophobés avec une quantité adéquate d'émulsion bitumineuse ou hydrocarbonée en mélangeant ces ingrédients, par exemple par malaxage, pendant une durée déterminée avant leur application, pour obtenir une inversion spontanée de l'émulsion H/E en émulsion E/H et un enrobage adhésif et ouvrable desdits supports hydrophobés par ledit liant bitumineux ou hydrocarboné formant la phase continue et extérieure de l'émulsion inversée E/H, ce sans rupture de ladite émulsion, et, enfin, à expulser l'eau de l'émulsion inverse E/H, par exemple par compaction ou en inversant ladite émulsion E/H.

2. Procédé selon la revendication 1, **caractérisé en ce que** la surstabilisation de l'émulsion de bitume ou hydrocarbonée anionique est réalisée en milieu alcalin au moyen d'une ou de plusieurs substances chimiques alcalines, utilisées seules ou en association avec d'autres substances alcalinisantes.

3. Procédé selon la revendication 2, **caractérisé en ce que** la surstabilisation est obtenue et ajustée par l'ajout d'une quantité prédéterminée de phosphate trisodique Na₃PO₄.12H₂O.

4. Procédé selon l'une quelconque des revendications 1 à 3, **caractérisé en ce que** le degré ou le potentiel d'hydrophobation des supports à enrober est ajusté et conservé à un niveau suffisant pour que l'eau émulsionnée dans le bitume, ou le liant hydrocarbonée analogue, après inversion de l'émulsion H / E originelle au contact des supports hydrophobés, soit constamment soumis à une pression d'expulsion, dès le début du mélangeage.

5. Procédé selon l'une quelconque des revendications 1 à 4, **caractérisé en ce que** le degré ou le potentiel d'hydrophobation des supports à enrober est porté à un niveau suffisant pour que la force d'attraction résultante génère une action d'attirance constante des globules de bitume sur lesdits supports, dont l'intensité permet, compte tenu de la plasticité des liants bitumineux à toute température, notamment aux températures extérieures usuelles, que leur aplatissement sur ces supports, pendant et après l'élimination de l'eau de l'émulsion, devienne physico-chimiquement adhésif et imperméable à l'eau.

6. Procédé selon l'une quelconque des revendications 1 à 5, **caractérisé en ce que** le degré d'ouvrabilité et/ou la durée de conservation d'un certain degré d'ouvrabilité de l'enrobé est (sont) réglé(e)(s) par le taux d'eau dans l'émulsion originelle et, le cas échéant, par emploi d'émulsions à plus ou moins faible taux de bitume.

7. Procédé selon l'une quelconque des revendications 1 à 6, **caractérisé en ce que** l'expulsion de l'eau de l'émulsion inverse surstabilisée est réalisée par introduction de carbonate de soude Na₂CO₃.

8. Procédé selon la revendication 7, **caractérisé en ce que** l'expulsion de l'eau de l'émulsion est accélérée par ajout d'amidon dilué dans une solution d'un savon anionique.

9. Utilisation des enrobés bitumineux susceptibles d'être obtenus au moyen d'un procédé selon l'une quelconque des revendications 1 à 8, avec des ouvrabilités adaptées, pour des travaux de revêtement routier, d'étanchéité et de maçonnerie dans le bâtiment.

10. Utilisation d'enrobés bitumineux susceptibles d'être obtenus au moyen de procédé selon l'une quelconque des revendications 1 à 8, pour la réalisation de produits agglomérés.

## Claims

1. Method for coating supports, such as granular supports or the like, **characterised in that** it consists in making the supports to be coated, of whatever type, hydrophobic, in supplying a bitumen emulsion or an anionic hydrocarbon oil-in-water emulsion, formed spontaneously or not, sufficiently stabilised to avoid any leakage on contact with the hydrophobic supports to be coated and being automatically reversed by a cold process into a water-in-oil emulsion on contact with said supports, then in bringing said hydrophobic supports into contact with a suitable amount of bituminous or hydrocarbon emulsion by mixing these ingredients, for example by kneading, for a predetermined period of time before they are applied, to obtain spontaneous reversal of the oil-in-water emulsion into a water-in-oil emulsion and an adhesive and workable coating of said hydrophobic supports by said bituminous or hydrocarbon binder forming the continuous and outer phase of the reversed water-in-oil emulsion, without breaking said emulsion, and finally in expelling water from the reversed water-in-oil emulsion, for example by compaction or by reversing said water-in-oil emulsion.

2. Method according to claim 1, **characterised in that** the overstabilisation of the bitumen or anionic hydrocarbon emulsion is carried out in an alkaline medium using one or more alkaline chemical substances individually or in association with other alkalinising substances.

3. Method according to claim 2, **characterised in that** the overstabilisation is obtained and adjusted by the addition of a predetermined amount of trisodium phosphate Na₃PO₄.12H₂O.

4. Method according to any one of claims 1 to 3, **characterised in that** the degree of, or the potential for, hydrophobisation of the supports to be coated is adjusted and maintained at a sufficient level for the water emulsified in the bitumen, or the similar hydrocarbon binder, after reversal of the original oil-in-water emulsion on contact with the hydrophobic supports, to be constantly subjected to an expulsion pressure from the start of the mixing process.

5. Method according to any one of claims 1 to 4, **characterised in that** the degree of, or the potential for, hydrophobisation of the supports to be coated is brought to a sufficient level for the resultant attraction force to generate an action for the constant attraction of the bitumen globules on said supports, the intensity of which, given the plasticity of the bituminous binders at any temperature, in particular at conventional external temperatures, allows the flattening of said globules on these supports, during and after removal of the water from the emulsion, to become physicochemically adhesive and water-impermeable.

6. Method according to any one of claims 1 to 5, **characterised in that** the degree of workability and/or the period during which a specific degree of workability of the coating is maintained is (are) adjusted by the water content of the original emulsion and, if appropriate, by the use of emulsions having a higher or lower bitumen content.

7. Method according to any one of claims 1 to 6, **characterised in that** water is expelled from the overstabilised reverse emulsion by the introduction of sodium carbonate Na₂CO₃.

8. Method according to claim 7, **characterised in that** the expulsion of water from the emulsion is accelerated by the addition of starch diluted in a solution of an anionic soap.

9. Use of the bituminous coated materials obtainable by a method according to any one of claims 1 to 8, with suitable workability, for road surfacing, sealing and masonry work in construction.

10. Use of bituminous coated materials obtainable by a method according to any one of claims 1 to 8 for the production of agglomerates.

## Patentansprüche

1. Verfahren zum Beschichten von Trägern vom Typ Granulat oder dergleichen, **dadurch gekennzeichnet, dass** es darin besteht, eine Hydrophobierung der zu beschichtenden Träger von welcher Art auch immer durchzuführen, eine anionische O/W-Bitumenemulsion oder bituminöse O/W-Emulsion von spontaner oder nicht spontaner Bildung bereitzustellen, die ausreichend stabilisiert ist, um jegliches Brechen in Kontakt mit den zu beschichtenden, hydrophob gemachten Trägern zu verhindern, und die bei Kontakt mit den Letztgenannten automatisch kalt in eine W/O-Emulsion umgekehrt wird, sodann die hydrophob gemachten Träger mit einer entsprechenden Menge an Bitumenemulsion oder bituminöser Emulsion in Kontakt zu bringen, indem diese Bestandteile zum Beispiel durch Rühren während eines bestimmten Zeitraums vor ihrer Anwendung gemischt werden, um eine spontane Umkehrung der O/W-Emulsion in eine W/O-Emulsion und eine haftende und bearbeitbare Beschichtung der hyrophob gemachten Träger durch das Bitumenbindemittel oder bituminöse Bindemittel zu erzielen, das die kontinuierliche und äußere Phase der umgekehrten W/O-Emulsion bildet, und dies ohne Brechen der Emulsion, und schließlich das Wasser aus der umgekehrten W/O-Emulsion auszustoßen, zum Beispiel durch Verdichtung oder durch Umkehren der W/O-Emulsion.

2. Verfahren nach Anspruch 1, **dadurch gekennzeichnet, dass** die Überstabilisierung der anionischen Bitumenemulsion oder bituminösen Emulsion in alkalischem Milieu mittels einer oder mehreren alkalischen chemischen Substanzen erfolgt, die allein oder in Verbindung mit anderen alkalisierenden Substanzen verwendet werden.

3. Verfahren nach Anspruch 2, **dadurch gekennzeichnet, dass** die Überstabilisierung durch Zugabe einer vorbestimmten Menge an Trinatriumphosphat Na₃PO₄.12H₂O erzielt und eingestellt wird.

4. Verfahren nach einem der Ansprüche 1 bis 3, **dadurch gekennzeichnet, dass** der Hydrophobierungsgrad oder das Hydrophobierungspotenzial der zu beschichtenden Träger auf ein Niveau eingestellt und auf diesem gehalten wird, das ausreicht, damit das im Bitumen emulgierte Wasser oder das analoge bituminöse Bindemittel nach dem Umkehren der ursprünglichen O/W-Emulsion in Kontakt mit den hydrophob gemachten Trägern ab dem Beginn des Mischvorgangs konstant einem Ausstoßdruck ausgesetzt wird.

5. Verfahren nach einem der Ansprüche 1 bis 4, **dadurch gekennzeichnet, dass** der Hydrophobierungsgrad oder das Hydrophobierungspotenzial der zu beschichtenden Träger auf ein Niveau gebracht wird, das ausreichend ist, damit die resultierende Anziehungskraft eine konstante Anziehungswirkung der Bitumenkügelchen auf die Träger erzeugt, deren Stärke es in Anbetracht der Plastizität der bituminösen Bindemittel bei jeder Temperatur, insbesondere bei den üblichen Außentemperaturen, ermöglicht, dass ihre Ablagerung auf diesen Trägern während und nach der Eliminierung des Wassers aus der Emulsion physikalischchemisch haftend und wasserundurchlässig wird.

6. Verfahren nach einem der Ansprüche 1 bis 5, **dadurch gekennzeichnet, dass** der Bearbeitbarkeitsgrad und/oder die Dauer der Aufrechterhaltung eines bestimmten Bearbeitbarkeitsgrads der Beschichtung durch den Wassergehalt in der ursprünglichen Emulsion und gegebenenfalls durch die Verwendung von Emulsionen mit mehr oder weniger niedrigem Bitumengehalt geregelt wird (werden).

7. Verfahren nach einem der Ansprüche 1 bis 6, **dadurch gekennzeichnet, dass** die Ausstoßung des Wassers aus der überstabilisierten umgekehrten Emulsion durch die Einführung von Natriumcarbonat Na₂CO₃ erfolgt.

8. Verfahren nach Anspruch 7, **dadurch gekennzeichnet, dass** die Ausstoßung des Wassers aus der Emulsion durch Zugabe von Stärke beschleunigt wird, die durch eine anionische Seifenlösung verdünnt wurde.

9. Verwendung der bituminösen Stoffe, die mit Hilfe eines Verfahrens nach einem der Ansprüche 1 bis 8 erzielt werden können und eine geeignete Bearbeitbarkeit aufweisen, für Straßenbelagsarbeiten sowie Abdichtungs- und Mauerarbeiten im Bauwesen.

10. Verwendung der bituminösen Stoffe, die mit Hilfe eines Verfahrens nach einem der Ansprüche 1 bis 8 erzielt werden können, für die Herstellung von agglomerierten Produkten.
